(19) Europäisches Patentamt / European Patent Office / Office européen des brevets

(11) **EP 2 626 935 A1**

(12) **EUROPEAN PATENT APPLICATION**
published in accordance with Art. 153(4) EPC

(43) Date of publication:
**14.08.2013 Bulletin 2013/33**

(51) Int Cl.:
*H01M 4/86* (2006.01)     *H01M 8/10* (2006.01)

(21) Application number: **11830499.7**

(86) International application number:
**PCT/JP2011/071294**

(22) Date of filing: **13.09.2011**

(87) International publication number:
**WO 2012/046566 (12.04.2012 Gazette 2012/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2010 JP 2010225105**

(71) Applicant: **Nissan Motor Co., Ltd Yokohama-shi, Kanagawa 221-0023 (JP)**

(72) Inventor: **HORIBE, Norifumi Atsugi-shi .Kanagawa 243-0123 (JP)**

(74) Representative: **Hoefer & Partner Pilgersheimer Straße 20 81543 München (DE)**

(54) **ELECTRODE FOR FUEL CELL AND MEMBRANE ELECTRODE ASSEMBLY**

(57)     Provided are a fuel cell electrode and a membrane electrode assembly in which catalyst particles are prevented from dissolving and the function of added catalyst can be sufficiently exerted when the fuel cell is operating at high current density. The fuel cell electrode includes an electrode material containing: an electrocatalyst having catalyst particles supported on a conductive support; a first ion conductor having anion conductivity; and a second ion conductor having a cation conductivity, the first and second ion conductors covering the electrocatalyst. The first ion conductor is provided to cover the catalyst particles, and the second ion conductor is provided to cover the first ion conductor and exposed part of the conductive support. The membrane electrode assembly includes the fuel cell electrode as at least one of the anode and cathode.

FIG. 1

**EP 2 626 935 A1**

**Description**

TECHNICAL FIELD

The present invention relates to a fuel cell electrode and a membrane electrode assembly. More specifically, the present invention relates to a fuel cell electrode and a membrane electrode assembly in which catalyst particles can be prevented from dissolving to prevent the performance degradation of the fuel cell which is operating at high-current density.

BACKGROUND ART

In a conventionally-proposed cathode electrode for polymer electrolyte fuel cells that includes a catalyst, anion conducting polymer, and cation conducting polymer, the interface between the anion conducting polymer and cation conducting polymer is provided completely within the cathode electrode, and the catalyst is embedded in the anion conducting polymer (see Patent Literature 1).

CITATION LIST

PATENT LITERATURE

Patent Literature 1: Japanese Patent No. 4334222

SUMMARY OF INVENTION

In the cathode electrode described in Patent Literature 1, however, the anion conducting polymer just covers the entire catalyst, and the covering structure thereof has not been studied enough. Accordingly, the added catalyst is not fully utilized, and the fuel cell provides poor output performance when the fuel cell is operating at high current density.

The present invention has been made in view of such conventional problems. It is an object of the present invention to provide a fuel cell electrode and a membrane electrode assembly in which catalyst particles are prevented from dissolving to sufficiently exert the function of the added catalyst when the fuel cell is operating at a high current density.

The inventor made various studies to achieve the aforementioned object. The inventor then found that the above object could be achieved by a certain arrangement of the ion conductor having anion conductivity and the ion conductor having cation conductivity and therefore completed the present invention.

A fuel cell electrode of the present invention includes an electrode material that contains: an electrocatalyst having catalyst particles supported on a conductive support; a first ion conductor having anion conductivity; and a second ion conductor having a cation conductivity, the first and second ion conductors covering the electrocatalyst. The first ion conductor is provided to cover the catalyst particles, and the second ion conductor is provided to cover the first ion conductor and exposed part of the conductive support.

The membrane electrode assembly of the present invention includes the aforementioned fuel cell electrode of the present invention applied to at least one of an anode and a cathode.

According to the present invention, in the fuel cell electrode of the present invention that includes an electrode material containing: an electrocatalyst having catalyst particles supported on a conductive support; a first ion conductor having anion conductivity; and a second ion conductor having a cation conductivity, the first and second ion conductors covering the electrocatalyst, the first ion conductor is provided to cover the catalyst particles, and the second ion conductor is provided to cover the first ion conductor and exposed part of the conductive support. It is therefore possible to provide a fuel cell electrode and a membrane electrode assembly with high current density in which the catalyst particles are prevented from dissolving and the performance degradation of the fuel cell is prevented when the fuel cell is operating at high current density.

BRIEF DESCRIPTION OF DRAWINGS

[Fig. 1] Fig. 1 is an explanatory view illustrating a part of an example of a fuel cell electrode according to an embodiment of the present invention.
[Fig. 2] Fig. 2 is an explanatory view illustrating a reaction mechanism at an anode.

[Fig. 3] Fig. 3 is an explanatory view illustrating a reaction mechanism at a cathode.

[Fig. 4] Fig. 4 is an explanatory view illustrating an example of a membrane electrode assembly according to the embodiment of the present invention.

[Fig. 5] Fig. 5 is a graph showing measurement results of cell voltage and resistivity for each current density under low-humidity conditions.

[Fig. 6] Fig. 6 is a graph showing measurement results of cell voltage and resistivity for each current density under high-humidity conditions.

[Fig. 7] Fig. 7 is a graph showing cyclic voltammograms against a reversible hydrogen electrode.

DESCRIPTION OF EMBODIMENTS

Hereinafter, a description is given of a fuel cell electrode in detail according to an electrode of the present invention with reference to the drawings.

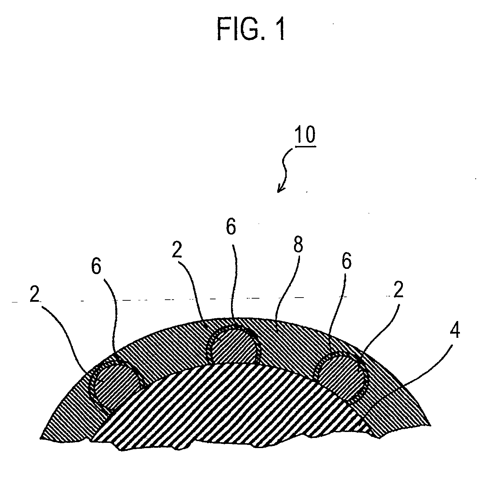

Fig. 1 is an explanatory view illustrating a part of an example of a fuel cell electrode according to an embodiment of the present invention. As shown in the drawing, the fuel cell electrode of the embodiment includes an electrode material 10 containing: an electrocatalyst composed of catalyst particles 2 supported on a conductive support 4; first ion conductors 6 having anion conductivity; and a second ion conductor 8 having cation conductivity. The first and second ion conductors 6 and 8 cover the electrocatalyst.

The first ion conductors 6 are provided so as to cover the respective catalyst particles 2, and the second ion conductor 8 is provided so as to cover the first ion conductors 6 and exposed part of the conductive support 4.

With such a configuration, each catalyst particle 2 is covered with a layer composed of the first ion conductor having anion conductivity in the vicinity thereof, the layer being thinner than the conventional one, and the other part is covered with the second ion conductivity having cation conductivity. This can prevent the performance degradation of the fuel cell, that is, an increase in resistance in the fuel cell when the fuel cell is operating at high current density, compared with the conventional one in which the catalyst particles and conductive support are fully covered with a first ion conductor having anion conductivity. Accordingly, the current density can be kept high.

Moreover, since each catalyst particle is covered with the first ion conductor having anion conductivity in the vicinity thereof, the environment in the vicinity of each catalyst particle is basic, thus preventing dissolution of the catalyst particles (platinum or the like, for example). It is therefore possible to enhance the durability thereof.

Furthermore, since each catalyst particle is covered with the first ion conductor having anion conductivity in the vicinity thereof, the environment in the vicinity of each catalyst particle is basic, and the catalyst particles can be therefore composed of transition metal such as nickel. Accordingly, the catalyst particles can be composed of low-platinum catalyst or no-platinum catalyst. This can provide more choices of catalyst, leading to lower cost.

Still furthermore, since each catalyst particle is covered with the first ion conductor having anion conductivity in the vicinity thereof, the environment in the vicinity of each catalyst particle is basic, and the environment of the other part is acidic. This causes water cycle in the vicinity of the catalyst and changes the water balance.

Further more, in the light of further increasing the aforementioned effect, it is desirable that the first ion conductor is provided in contact with the catalyst particles and the second ion conductor are provided in contact with the first ion conductor and conductive support.

Furthermore, in the light of further increasing the aforementioned effect, preferably, the first ion conductor has an average covering thickness of not less than 0.5 nm and not more than 5 nm. Herein, the average covering thickness ($t_{ionomer}$) is calculated by Equation 1 below.

[Equation 1]

$$t_{ionomer} = \frac{\dfrac{m_{ionomer}}{\rho_{ionomer}}}{S_{catalyst} \times \dfrac{W_{catalyst}}{100}} \quad \ldots(1)$$

(In Equation (1), mionomer is the mass of the first ion conductor per 1 gram of the electrocatalyst; $\rho_{ionomer}$, the density of the first ion conductor; $S_{catalyst}$, covered area of catalyst particles; and $W_{catalyst}$, the mass ratio of the catalyst particles to the electrocatalyst.)

Moreover, mionomer in Equation (1) above is calculated by Equation (2) below.

$$m_{ionomer} = \theta_{ionomer/carrier} \times \frac{(100 - W_{catalyst})}{100} \qquad ...(2)$$

(In Equation (2), $\theta_{ionomer/catalyst}$ is the mass ratio of the first ion conductor to the conductive support, and $W_{catalyst}$ is the mass ratio of the catalyst particles to the electrocatalyst.)

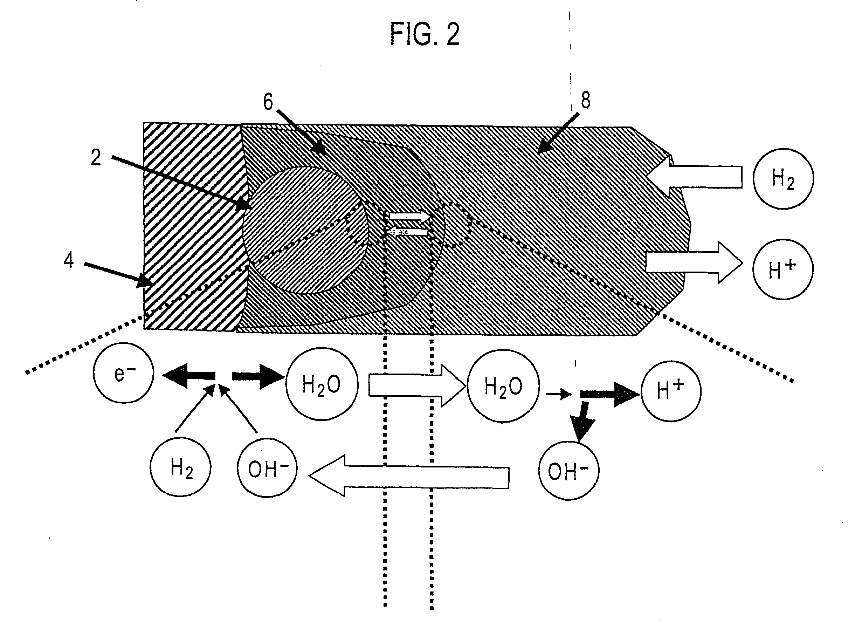

Fig. 2 is an explanatory view illustrating the reaction mechanism at the anode.

As shown in the drawing, each first ion conductor 6 having anion conductivity is provided in contact with the corresponding catalyst particle 2. The environment in the vicinity of the catalyst particle 2 is therefore basic. In the interface between the catalyst particle 2 and the first ion conductor 6, hydrogen oxidation reaction expressed by Equation (3) below proceeds. Furthermore, since the first ion conductor 6 is covered with the second ion conductor 8, in the interface between the first ion conductor 6 and the second ion conductor 8, water dissociation reaction expressed by Equation (4) below proceeds. Water cycle thus occurs in the vicinity of the catalyst particles 2, changing the water balance.

$$2H_2 + 4OH^- \rightarrow 4H_2O + 4e^- \qquad (3)$$

$$H_2O \rightarrow OH^- + H^+ \qquad (4)$$

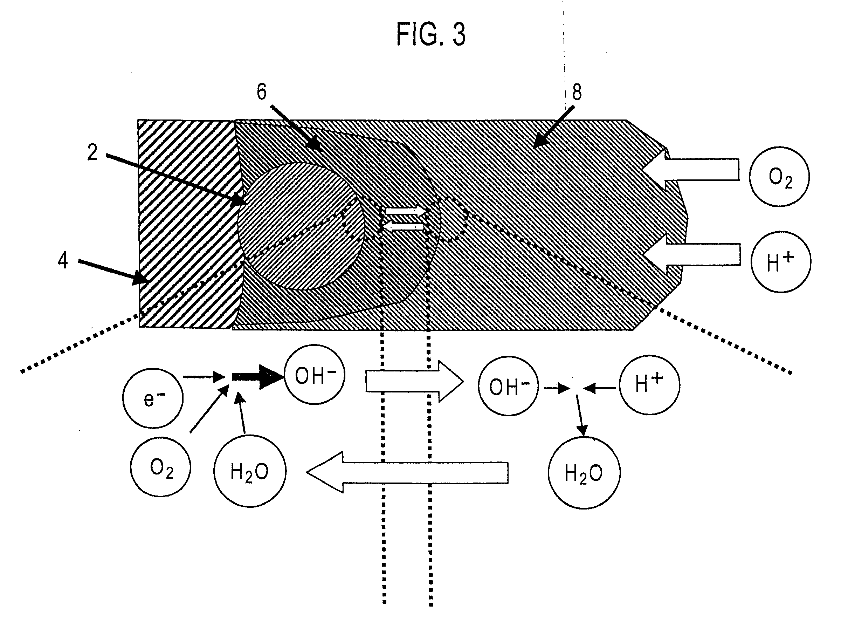

FIG 3 is an explanatory view illustrating the reaction mechanism at the cathode.

As shown in the drawing, the anion-conductive first ion conductor 6 is provided in contact with each catalyst particle 2. The environment in the vicinity of the catalyst particle 2 is therefore basic environment. Accordingly, in the interface between the catalyst particle 2 and the first ion conductor 6, oxygen reduction reaction expressed by Equation (5) below proceeds. Furthermore, since the first ion conductor 6 is covered with the second ion conductor 8, water generation reaction expressed by Equation (6) below proceeds. In such a manner, water cycle occurs in the vicinity of the catalyst particles 2, changing the water balance.

$$O_2 + 2H_2O + 4e^- \rightarrow 4OH^- \qquad (5)$$

$$OH^- + H^+ \rightarrow H_2O \qquad (6)$$

Herein, each configuration is described in detail.

The first ion conductor is not particularly limited as far as the first ion conductor has anion conductivity but is desirably ion conducting polymer having anion conductivity. Moreover, it is desirable that the first ion conductor be permeable to water and gas.

The ion conducting polymer having anion conductivity can be various types of resin capable of transporting anions (hydroxide ions $OH^-$), for example. Specific examples thereof include styrene-vinylbenzyltrialkylammonium copolymer, N,N-dialkylalkyleneammonium, polyvinylbenzyltrialkylammonium (PVBTMA), polyvinylalkyltrialkylammonium, alkylene-vinylalkylenetriayalkylammonium copolymer, and the like. Among these resins, styrene-vinylbenzyltrialkylammonium copolymer and PBVTMA are desirably used for the excellent chemical stability thereof.

The second ion conductor is not particularly limited as far as the second ion conductor has cation conductivity but is desirably ion conducting polymer having cation conductivity. Moreover, it is desirable that the second ion conductor be permeable to water and gas.

The ion conducting polymer having cation conductivity can be various types of resin capable of transporting cations (hydrogen ions $H^+$), for example. Preferable examples thereof include sulfonic acid resin, phosphonic acid resin, carboxylic acid resin, imide resin, and the like.

Examples of sulfonic resin include tetrafluoroethylene-perfluorovinyl ether sulfonic acid copolymer known as Nafion (registered trademark) (DuPont), Aciplex (registered trademark) (Asahi Kasei Corporation), Flemion (registered trademark) (Asahi Glass Co., Ltd.), or the like, polystyrene sulfonic acid, cross-linked polystyrene sulfonic acid, ethylenetetrafluoroethylene copolymer-g-polystyrene sulfonic acid, sulfonated polyarylene ether ether ketone, sulfonated polyarylene ether sulfone, polytrifluorostyrene sulfonic acid, sulfonated poly(2,3-diphenyl-1,4-phenylene oxide) resin, sulfonated poly(benzylsilane) resin, sulfonated polyimide resin, polyvinyl sulfonic acid, sulfonated phenol resin, sulfonated polyamide resin, and the like.

Examples of phosphonic acid resin include tetrafluoroethylene-perfluorovinyl ether sulfonic acid copolymer, polystyrene phosphonic acid, cross-linked polystyrene phosphonic acid, polyvinylbenzyl phosphonic acid, ethylenetetrafluoroethylene copolymer-g-polystyrene phosphonic acid, phosphonated polyarylene ether ether ketone, phosphonated polyarylene ether sulfone, polytrifluorostyrene phosphonic acid, phosphonated poly(2,3-diphenyl-1,4-phenylene oxide) resin, phosphonated poly(benzylsilane) resin, phosphonated polyimide resin, polyvinyl phosphonic acid, phosphonated phenol resin, phosphonated polyamide resin, polybenzimidazole phosphoric acid composite resin, and the like.

Examples of carboxylic acid resin include tetrafluoroethylene-perfluorovinyl ether calboxylic acid copolymer, polyvinyl benzoic acid, cross-linked polyvinyl benzoic acid, ethylenetetrafluoroethylene copolymer-g-polyvinyl benzoic acid, carboxylated polyarylene ether ether ketone, carboxylated polyarylene ether sulfone, polytrifluorostyrene carboxylic acid, carboxylated poly(2,3-diphenyl-1,4-phenylene oxide) resin, carboxylated poly(benzylsilane) resin, carboxylated polyimide resin, and the like.

Examples of imide resin include tetrafluoroethylene-perfluorovinyl ether sulfone imide acid copolymer, polystyrene trifluoromethylsulfone imide, and the like.

The ion conducting polymer having cation conductivity is desirably the same type as resin used in later-described electrolyte membrane. If the fuel cell electrode includes the same type of resin as the electrolyte membrane, the fuel cell electrode and electrolyte membrane are well joined to each other, thus increasing the proton conductivity. The ion conducting polymer having cation conductivity then only needs to be properly selected in consideration of the type of used electrolyte membrane.

Examples of catalyst particles include platinum, iridium, palladium, ruthenium, gold, silver, nickel, cobalt, iron, tungsten, chrome, molybdenum, tantalum, niobium, titanium, zirconium, and the like and further include alloys, oxides, nitrides, carbides, metal complexes, and composites thereof. It is possible to use these materials alone or in combination of two or more mixed.

The conductive support can be a carbon, a conductive oxide, a conductive nitride, a conductive carbide, or a composite thereof. These materials can be used alone or in combination of two or more.

Next, the membrane electrode assembly according to an embodiment of the present invention is described in detail with reference to the drawings.

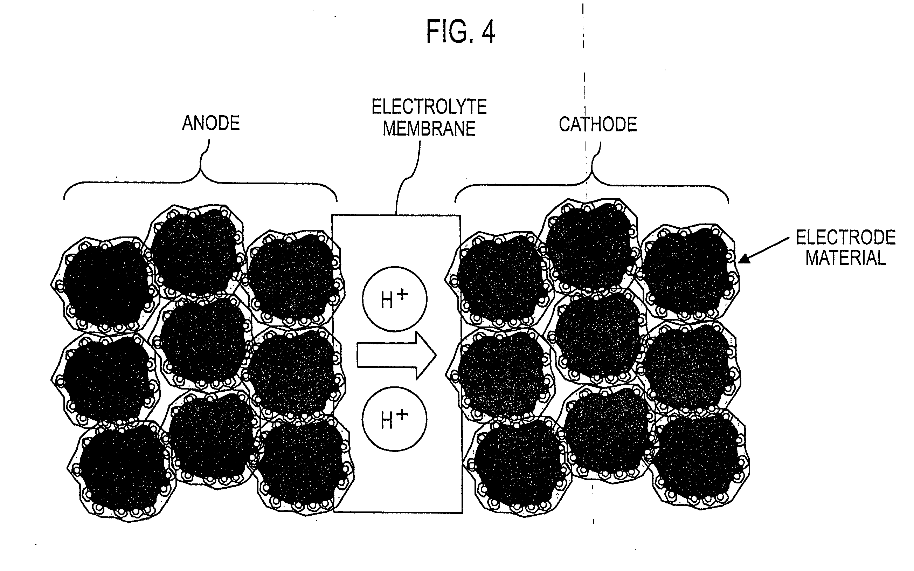

Fig. 4 is an explanatory view illustrating the membrane electrode assembly according to the embodiment of the present invention. As shown in the drawing, the fuel cell electrodes of this embodiment include the fuel cell electrode according to the aforementioned embodiment of the present invention as each of an anode and a cathode.

Moreover, each fuel cell electrode includes the electrode material containing: the electrocatalyst composed of catalyst particles supported on the conductive support, a first ion conductor having anion conductivity, and a second ion conductor having cation conductivity, the first and second ion conductors covering the electrocatalyst.

In the electrode material, the first ion conductor is provided so as to cover the catalyst particles, and the second ion conductor is provided so as to cover the first ion conductor and exposed part of the conductive support.

With such a configuration, each catalyst particle is covered with a layer composed of the first ion conductor having anion conductivity in the vicinity thereof, the layer being thinner than the conventional one, and the other part is covered with the second ion conductor having cation conductivity. This can prevent the performance degradation of the fuel cell, that is, an increase in resistance in the fuel cell which is operating at high current density, compared with the conventional one in which the catalyst particles and conductive support are fully covered with the first ion conductor having anion conductivity.

Moreover, since each catalyst particle is covered with the first ion conductor having anion conductivity in the vicinity thereof, the environment in the vicinity of each catalyst particle is basic, thus preventing dissolution of the catalyst particles (platinum or the like, for example). It is therefore possible to increase the durability. Furthermore, since each catalyst particle is covered with the first ion conductor having anion conductivity in the vicinity thereof, the environment in the vicinity of each catalyst particle is basic, and the catalyst particles can be made of transition metal such as nickel.

Accordingly, the catalyst particles can be composed of non-platinum catalyst. Still furthermore, since each catalyst particle is covered with the first ion conductor having anion conductivity in the vicinity thereof, the environment in the vicinity of each catalyst particle is basic, and the environment of the other part is acidic. This causes water cycle in the vicinity of the catalyst and therefore changes the water balance.

The reaction mechanisms at the anode and cathode are described above, and as the net reaction, the reaction expressed by Equation (7) below proceeds.

$$2H_2 + O_2 \rightarrow 2H_2O \qquad (7)$$

Herein, the electrolyte membrane is described in detail.

The electrolyte membrane is not particularly limited as far as the electrolyte membrane is composed of ion conducting polymer having cation conductivity but is desirably ion conducting polymer having cation conductivity.

For example, the ion conducting polymer having cation conductivity can be various types of resin capable of transporting cations (hydrogen ions H+). For example, the ion conducting polymer having cation conductivity can be the aforementioned sulfonic acid resins, phosphonic acid resins, calboxylic acid resins, imide resins, and the like.

The aforementioned membrane electrode assembly can be fabricated by the following method, for example. First, catalyst particles of metal are dispersed and supported by the conductive support to form electrocatalyst. In this process, a conventionally-known method, such as a precipitation, gelation, impregnation, or ion exchange method, can be applied.

Subsequently, the conductive support with the metallic catalyst particles supported thereof, the first ion conductor having anion conductivity, and a solvent of the first ion conductor are mixed. In this process, the first ion conductor is added in such a ratio that the electrocatalyst is not completely covered, then mixed, and concentrated. Concentration and drying of the mixture make the product less likely to dissolve even if the mixture is added again to the same or different type of solvent. In this process, it is confirmed whether the desired structure is formed by performing preparatory examinations several times (observation by scanning-type electronic microscope after preparation and drying). The first ion conductor is more likely to be adsorbed to the metallic catalyst particles than the conductive support (carbon, for example) because of the nature thereof. Accordingly, by reducing the amount of the first ion conductor added, the first ion conductor can be provided so as to cover only the catalyst particles.

Furthermore, the second ion conductor having cation conductivity and the solvent thereof (it is desirable to use a solvent with a low solubility to the first ion conductor) is added and mixed.

Thereafter, the obtained mixture is directly sprayed onto the electrolyte membrane or is sprayed onto a transfer material (a film or gas diffusion layer, for example) and then transferred to the electrolyte membrane. The membrane electrode assembly can be thus obtained.

[EXAMPLES]

Hereinbelow, the present invention is described in more detail by Examples and Comparative Examples but not limited to these examples.

(Example 1)

Platinum-supported carbon as the electrocatalyst, which included Ketjenblack and Pt of 50 mass% supported thereon, water, and NPA(1-propanole) were put into a vessel of a sand grinder (AIMEX CO., Ltd) for pulverization. Subsequently, anion exchange (conductive) ionomer (AS-3, Tokuyama Corporation) as the first ion conductor having anion conductivity was added so that the mass ratio of the first ion conductor to the electrocatalyst (the first ion conductor/ carbon) was 0.2, then mixed, and concentrated. In SEM observation after drying, it was confirmed that the catalyst particles were covered with the first ion conductor and part of the conductive support was exposed.

Furthermore, cation exchange (conducting) ionomer (Nafion (registered trademark) D2020, DuPont) as the second ion conductor having cation conductivity was added and mixed so that the mass ratio of the second ion conductor to the electrocatalyst (the second ion conductor/carbon) was 0.8.

The obtained mixture was sprayed onto one surface of a PTFE (polytetrafluoroethylene) to form the fuel cell electrode (anode) of Example 1. The amount of platinum used was 0.35 mg/cm$^2$.

On the other hand, platinum-supported carbon as the electrocatalyst, which was composed of Ketjenblack and platinum of 50 mass% supported thereon, water, and NPA(1-propanole) were put into a vessel of a sand grinder (AIMEX CO., Ltd) for pulverization. Subsequently, cation exchange (conductive) ionomer (Nafion (registered trademark) D2020, Du-Pont) as the ion conductor having cation conductivity was added and mixed so that the mass ratio of the ion conductor to the electrocatalyst (the ion conductor/carbon) was 1.0. The obtained mixture was sprayed onto one surface of a PTFE (polytetrafluoroethylene) to form the fuel cell electrode (cathode) of Example 1. The amount of platinum used was 0.35 mg/cm$^2$.

A gasket (Teonex, 25 $\mu$m thick (adhesive layer: 10 $\mu$m thick), Teijin DuPont Films) was placed on the periphery of each side of a electrolyte membrane (Nafion (registered trademark) NR211, 25 $\mu$m thick), and the PTFE (polytetrafluoroethylene) with the fuel cell electrode (anode) and fuel cell electrode (cathode) formed thereon were placed on exposed portions of the electrolyte membrane (active area: 25 cm$^2$ (5.0 cm x 5.0 cm)). A pressure of 0.8 MPa was added thereto to bring the electrolyte membrane and each fuel cell electrode into contact with each other, which were then heated at 150°C for 10 minutes to be joined. The membrane electrode assembly of Example 1 was thus obtained.

The ratio of platinum in the platinum-supporting carbon was 50 mass%, and the weight ratio of anion exchange ionomer/ carbon was 0.2. Herein, the "ratio of platinum in the platinum-supporting carbon" and "the weight ratio of anion exchange ionomer/carbon" were known from the quantities of starting/raw materials or catalog values, and the covered area of platinum is known from measurement, such as CO pulse measurement, or catalog values.

(Example 2)

Platinum-supported carbon as the electrocatalyst, which was composed of Ketjenblack and Pt of 50 mass%, water, and NPA(1-propanole) were put into a vessel of a sand grinder (AIMEX CO., Ltd) for pulverization. Subsequently, anion exchange (conductive) ionomer (AS-3, Tokuyama Corporation) as the first ion conductor having anion conductivity was added so that the mass ratio of the first ion conductor to the electrocatalyst (the first ion conductor/ carbon) was 0.2, then mixed, and concentrated. In SEM observation after drying, it was confirmed that the catalyst particles were covered with the first ion conductor and part of the conductive support was exposed. Furthermore, cation exchange (conducting) ionomer (Nafion (registered trademark) D2020, DuPont) as the second ion conductor having cation conductivity was added and mixed so that the mass ratio of the second ion conductor to the electrocatalyst (the second ion conductor/carbon) was 0.8.

The obtained mixture was sprayed onto one surface of a PTFE (polytetrafluoroethylene) to form the fuel cell electrode (cathode) of Example 2. The amount of platinum used was 0.35 mg/cm$^2$.

On the other hand, platinum-supported carbon as the electrocatalyst, which was composed of Ketjenblack and Pt of 50 mass% supported thereon, water, and NPA(1-propanole) were put into a vessel of a sand grinder (AIMEX CO., Ltd) for pulverization. Subsequently, cation exchange (conducting) ionomer (Nafion (registered trademark) D2020, DuPont) as the ion conductor having cation conductivity was added and mixed so that the mass ratio of the ion conductor to the electrocatalyst (the ion conductor/carbon) was 1.0. The obtained mixture was sprayed onto one surface of a PTFE (polytetrafluoroethylene) to form the fuel cell electrode (anode) of Example 2. The amount of platinum used was 0.35 mg/cm$^2$.

A gasket (Teonex, 25 $\mu$m thick (adhesive layer: 10 $\mu$m thick), Teijin DuPont Films) was placed in the vicinity of each side of an electrolyte membrane (Nafion (registered trademark) NR211, 25 $\mu$m thick), and the PTFE (polytetrafluoroethylene) with the fuel cell electrode (anode) and fuel cell electrode (cathode) formed thereon were placed on the respective exposed portions of the electrolyte membrane (active area: 25 cm$^2$ (5.0 cm x 5.0 cm)). A pressure of 0.8 MPa was added thereto to bring the electrolyte membrane and each fuel cell electrode into contact with each other, which were then heated at 150°C for 10 minutes to be joined. The membrane electrode assembly of Example 2 was thus obtained.

(Comparative Example 1)

Platinum-supported carbon as the electrocatalyst, which was composed of Ketjenblack and Pt of 50 mass% supported thereon, water, and NPA(1-propanole) were put into a vessel of a sand grinder (AIMEX CO., Ltd) for pulverization.

Subsequently, cation exchange ionomer (Nafion (registered trademark) D2020, DuPont) as the ion conductor having cation conductivity was added and mixed so that the mass ratio of the ion conductor to the electrocatalyst (the ion conductor/carbon) was 1.0.

The obtained mixture was sprayed onto one surface of each of two PTFE (polytetrafluoroethylene) to form the fuel cell electrode (anode) and fuel cell electrode (cathode) used in Comparative Example 1. The amounts of platinum used were 0.35 mg/cm$^2$.

A gasket (Teonex, 25 $\mu$m thick (adhesive layer: 10 $\mu$m thick), Teijin DuPont Films) was placed on the periphery of each side of an electrolyte membrane (Nafion (registered trademark) NR211, 25 $\mu$m thick), and the PTFE (polytetrafluoroethylene) with the fuel cell electrode (anode) and fuel cell electrode (cathode) formed thereon were placed on the respective exposed portions of the electrolyte membrane (active area: 25 cm$^2$ (5.0 cm x 5.0 cm)). A pressure of 0.8 MPa was added thereto to bring the electrolyte membrane and each fuel cell electrode into contact with each other, which were then heated at 150°C for 10 minutes to be joined. The membrane electrode assembly of Comparative Example 1 was thus obtained.

(Comparative Example 2)

Platinum-supported carbon, as the electrocatalyst, which was composed of Ketjenblack and Pt of 50 mass% supported thereof, water, and NPA(1-propanole) were put into a vessel of a sand grinder (AIMEX CO., Ltd) for pulverization.

Subsequently, anion exchange ionomer (AS-3, Tokuyama Corporation) as the first ion conductor having anion conductivity was added so that the mass ratio of the first ion conductor to the electrocatalyst (the first ion conductor/carbon) was 0.5, then mixed, and concentrated. In SEM observation after drying, it was not confirmed that the catalyst particles were covered with the first ion conductor and part of the conductive support was exposed.

Furthermore, cation exchange ionomer (Nafion (registered trademark) D2020, DuPont) as the second ion conductor having cation conductivity was added and mixed so that the mass ratio of the second ion conductor to the electrocatalyst (the second ion conductor/carbon) was 0.5.

The obtained mixture was sprayed onto one surface of a PTFE (polytetrafluoroethylene) to form the fuel cell electrode (anode) of Comparative Example 2. The amount of platinum used was 0.35 mg/cm$^2$.

On the other hand, platinum-supported carbon as the electrocatalyst, which was composed of Ketjenblack and Pt of 50 mass% supported thereon, water, and NPA(1-propanole) were put into a vessel of a sand grinder (AIMEX CO., Ltd) for pulverization. Subsequently, cation exchange (conductive) ionomer (Nafion (registered trademark) D2020, DuPont) as the ion conductor having cation conductivity was added and mixed so that the mass ratio of the ion conductor to the electrocatalyst (the ion conductor/carbon) was 1.0. The obtained mixture was sprayed onto one surface of a PTFE (polytetrafluoroethylene) to form the fuel cell electrode (cathode) of Comparative Example 2. The amount of platinum used was 0.35 mg/cm$^2$.

A gasket (Teonex, 25 $\mu$m thick (adhesive layer: 10 $\mu$m thick), Teijin DuPont Films) was placed on the periphery of each side of an electrolyte membrane (Nafion (registered trademark) NR211, 25 $\mu$m thick), and the PTFE (polytetrafluoroethylene) with the fuel cell electrode (anode) and fuel cell electrode (cathode) formed thereon were placed on the respective exposed portions of the electrolyte membrane (active area: 25 cm$^2$ (5.0 cm x 5.0 cm)). A pressure of 0.8 MPa was added thereto to bring the electrolyte membrane and each fuel cell electrode into contact with each other, which were then heated at 150°C for 10 minutes to be joined. The membrane electrode assembly of Comparative Example 2 was thus obtained.

(Comparative Example 3)

Platinum-supported carbon as the electrocatalyst, which was composed of Ketjenblack and Pt of 50 mass% supported thereon, water, and NPA(1-propanole) were put into a vessel of a sand grinder (AIMEX CO., Ltd) for pulverization.

Subsequently, anion exchange ionomer (AS-3, Tokuyama Corporation) as the first ion conductor having anion conductivity was added so that the mass ratio of the first ion conductor to the electrocatalyst (the first ion conductor/carbon) was 0.8, then mixed, and concentrated. In SEM observation after drying, it was not confirmed that the catalyst particles were covered with the first ion conductor and part of the conductive support was exposed.

Furthermore, cation exchange ionomer (Nafion (registered trademark) D2020, DuPont) as the second ion conductor having cation conductivity was added and mixed so that the mass ratio of the second ion conductor to the electrocatalyst (the second ion conductor/carbon) was 0.2.

The obtained mixture was sprayed onto one surface of a PTFE (polytetrafluoroethylene) to form the fuel cell electrode (cathode) of Comparative Example 3. The amount of platinum used was 0.35 mg/cm$^2$.

On the other hand, platinum-supported carbon as the electrocatalyst, which was composed of Ketjenblack and Pt of 50 mass% supported thereon, water, and NPA(1-propanole) were put into a vessel of a sand grinder (AIMEX CO., Ltd) for pulverization. Subsequently, cation exchange (conducting) ionomer (Nafion (registered trademark) D2020, DuPont) as the ion conductor having cation conductivity was added and mixed so that the mass ratio of the ion conductor to the electrocatalyst (the ion conductor/carbon) was 1.0. The obtained mixture was sprayed onto one surface of a PTFE (polytetrafluoroethylene) to form the fuel cell electrode (anode) of Comparative Example 3. The amount of platinum used was 0.35 mg/cm$^2$.

A gasket (Teonex, 25 $\mu$m thick (adhesive layer: 10 $\mu$m thick), Teijin DuPont Films) was placed on the periphery of each side of an electrolyte membrane (Nafion (registered trademark) NR211, 25 $\mu$m thick), and the PTFE (polytetrafluoroethylene) with the fuel cell electrode (anode) and fuel cell electrode (cathode) formed thereon were placed on the respective exposed portions of the electrolyte membrane (active area: 25 cm$^2$ (5.0 cm x 5.0 cm)). A pressure of 0.8 MPa was added thereto to bring the electrolyte membrane and each fuel cell electrode into contact with each other, which were then heated at 150°C for 10 minutes to be joined. The membrane electrode assembly of Comparative Example 3 was thus obtained.

(Comparative Example 4)

Platinum-supported carbon as the electrocatalyst, which was composed of Ketjenblack and Pt of 50 mass% supported thereon, water, and NPA(1-propanole) were put into a vessel of a sand grinder (AIMEX CO., Ltd) for pulverization.

Subsequently, anion exchange ionomer (AS-3, Tokuyama) as the ion conductor having anion conductivity was added and mixed so that the mass ratio of the ion conductor to the electrocatalyst (the ion conductor/carbon) was 1.0.

The obtained mixture was sprayed onto one surface of each of two PTFE (polytetrafluoroethylene) form the fuel cell electrode (anode) and fuel cell electrode (cathode) used in Comparative Example 4. The amounts of platinum used were 0.35 mg/cm$^2$.

A gasket (Teonex, 25 $\mu$m thick (adhesive layer: 10 $\mu$m thick), Teijin DuPont Films) was placed on the periphery of each side of an electrolyte membrane (Nafion (registered trademark) NR211, 25 $\mu$m thick), and the PTFE (polytetrafluoroethylene) with the fuel cell electrode (anode) and fuel cell electrode (cathode) formed thereon were placed at the respective exposed portions of the electrolyte membrane (active area: 25 cm$^2$ (5.0 cm x 5.0 cm)). A pressure of 0.8 MPa was added thereto to bring the electrolyte membrane and each fuel cell electrode into contact with each other, which were then heated at 150°C for 10 minutes to be joined. The membrane electrode assembly of Comparative Example 4 was thus obtained.

[I-V Performance Evaluation]

The membrane electrode assembly of each example was sandwiched by gas diffusion layers (25BC, SGL GROUP) and set in a test cell for measurement of cell voltage and resistivity for each current density under low-humidity conditions (constant flow rate (FR const.), anode relative humidity (RHa), 20%; cathode relative humidity (RHc), 20%; anode pressure (Pa), 100kPa-g (gauge pressure); cathode pressure (Pc), 100kPa-g) and high-humidity conditions (constant flow rate (FR const.), anode relative humidity (RHa), 90%; cathode relative humidity (RHc), 90%; anode pressure (Pa), 100kPa-g; cathode pressure (Pc), 100kPa-g).

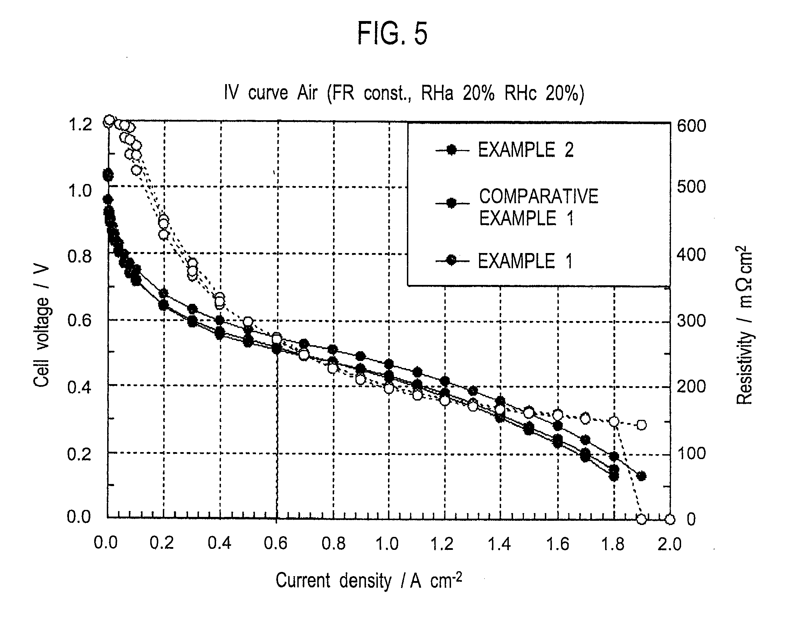

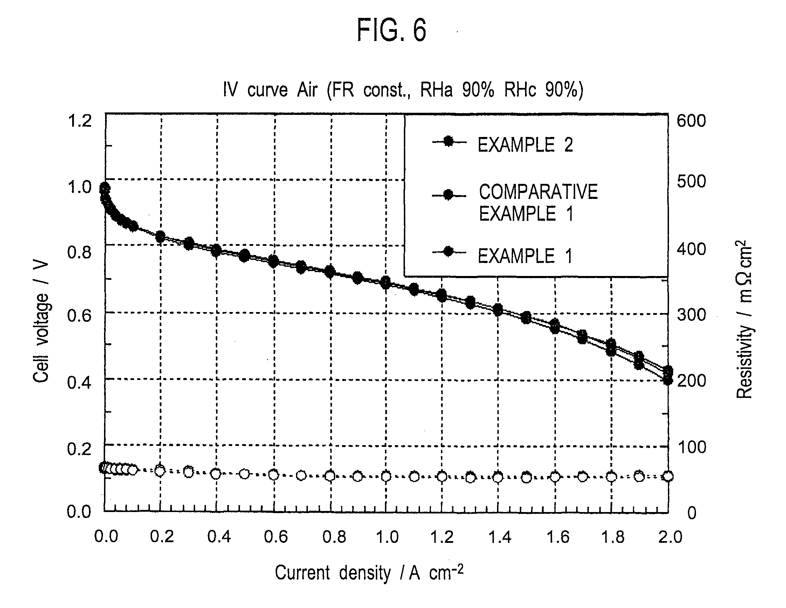

The obtained results are shown in Figs. 5 and 6. The cell voltage is indicated by solid lines, and the resistivity is indicated by dashed lines.

Figs. 5 and 6 show that Examples 1 and 2 could provide a power generation performance comparable to Comparative Example 1 under the low- and high-humidity conditions. Moreover, Fig. 5 shows that under the low-humidity conditions, Example 1 provided a slightly higher power generation performance.

[CV-profile comparison of fuel cell electrode]

The current density of the fuel cell electrode obtained in each example was measured at a temperature of 80°C and a relative humidity of 100% against a hydrogen reversible electrode (Potential vs. RHE).

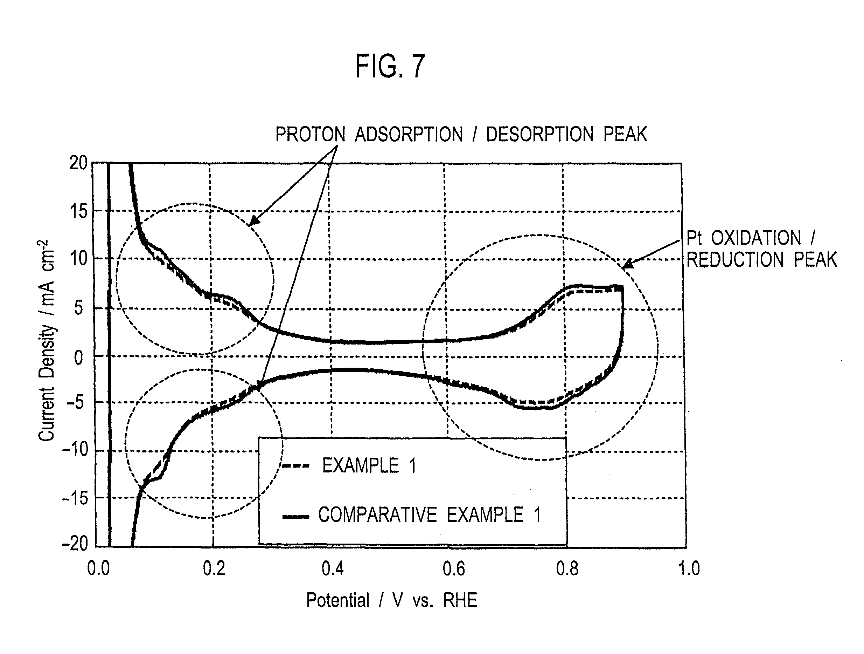

The obtained results are shown in Fig. 7.

Fig. 7 shows that Example 1 and Comparative Example 1 differ from each other in proton adsorption/desorption peak and platinum oxidation/reduction peak. The peak profiles are different although the amounts of Pt thereof are the same. This reveals that, in Example 1, the electrocatalyst is covered with other than Nafion (registered trademark) and the desired structure is formed. Specifically, the first ion conducting polymer having anion conductivity (hydroxide ion conductivity) is directly located to cover platinum as the catalyst particles, and the second ion conducting polymer having cation conductivity (hydrogen ion conductivity) is directly located to cover the first ion conducting polymer and the exposed part of carbon. It can be inferred that such covering prevents dissolution (deterioration) of platinum of the catalyst particles. Moreover, it can be inferred that the above covering forms basic environment in the vicinity of the catalyst particles and acidic environment in the other part to make water cycle in the vicinity of catalyst and change the water balance.

Furthermore, it can be inferred that the equal effect to the aforementioned effect can be obtained even when the present invention is applied to both the anode and cathode.

REFERENCE SIGNS LIST

2      CATALYST PARTICLES

4      CONDUCTIVE SUPPORT

6      FIRST ION CONDUCTOR

8      SECOND ION CONDUCTOR

10    ELECTRODE MATERIAL

**Claims**

1.  A fuel cell electrode, comprising
     an electrode material including:

          an electrocatalyst having catalyst particles supported on a conductive support;

a first ion conductor having anion conductivity; and

a second ion conductor having a cation conductivity, the first and second ion conductors covering the electrocatalyst wherein

the first ion conductor is provided to cover the catalyst particles, and the second ion conductor is provided to cover the first ion conductor and an exposed part of the conductive support.

2.  The fuel cell electrode according to claim 1, wherein the first ion conductor is in contact with the catalyst particles and the second ion conductor is in contact with the first ion conductor and conductive support.

3.  The fuel cell electrode according to claim 1 or 2, wherein the first and second ion conductors are ion conducting polymer.

4.  The fuel cell electrode according to any one of claims 1 to 3, wherein the first ion conductor has hydroxide ion conductivity and the second ion conductor has hydrogen ion conductivity.

5.  The fuel cell electrode according to any one of claims 1 to 4, wherein the catalyst particles contain at least one selected from a group consisting of a single one, an alloy, an oxide, a nitride, a carbide, a metallic complex, and a composite containing at least one element selected from a group consisting of platinum, iridium, palladium, ruthenium, gold, silver, copper, nickel, cobalt, iron, tungsten, chromium, molybdenum, tantalum, niobium, titanium, and zirconium.

6.  The fuel cell electrode according to any one of claims 1 to 5, wherein the conductive support contains at least one selected from a group consisting of carbon, a conductive oxide, a conductive nitride, a conductive carbide, and a composite thereof.

7.  A membrane electrode assembly, comprising the fuel cell electrode according to any one of claims 1 to 6 as an anode.

8.  A membrane electrode assembly, comprising the fuel cell electrode according to any one of claims 1 to 6 as a cathode.

9.  A membrane electrode assembly, comprising the fuel cell electrode according to any one of claims 1 to 6 as each of an anode and a cathode.

FIG. 1

FIG. 2

FIG. 3

EP 2 626 935 A1

FIG. 4

ELECTRODE MATERIAL

CATHODE

ELECTROLYTE MEMBRANE

ANODE

$H^+$

$H^+$

# FIG. 5

IV curve Air (FR const., RHa 20% RHc 20%)

EP 2 626 935 A1

# FIG. 6

IV curve Air (FR const., RHa 90% RHc 90%)

Legend:
- EXAMPLE 2
- COMPARATIVE EXAMPLE 1
- EXAMPLE 1

## FIG. 7

PROTON ADSORPTION / DESORPTION PEAK

Pt OXIDATION / REDUCTION PEAK

--- EXAMPLE 1

— COMPARATIVE EXAMPLE 1

Current Density / mA cm$^2$

Potential / V vs. RHE

EP 2 626 935 A1

## INTERNATIONAL SEARCH REPORT

| International application No. |
|---|
| PCT/JP2011/071294 |

A. CLASSIFICATION OF SUBJECT MATTER
*H01M4/86*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M4/86, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-512652 A (AB. Volvo), 22 April 2004 (22.04.2004), claims; fig. 1 & US 2004/0028992 A1 & EP 1338053 A & WO 2002/035633 A1 | 1-9 |
| X | JP 2005-268044 A (Toyota Central Research and Development Laboratories, Inc.), 29 September 2005 (29.09.2005), claims; paragraph [0050] (Family: none) | 1-9 |
| A | JP 2007-18735 A (Nissan Motor Co., Ltd.), 25 January 2007 (25.01.2007), claims (Family: none) | 1-9 |

☐ Further documents are listed in the continuation of Box C. ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 October, 2011 (25.10.11) | 01 November, 2011 (01.11.11) |

| Name and mailing address of the ISA/<br>  Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

**Patent documents cited in the description**

- JP 4334222 B